# EUROPÄISCHE PATENTANMELDUNG

(11) **EP 4 756 391 A1**
(43) Veröffentlichungstag der Anmeldung: **10.06.2026**
(21) Anmeldenummer: 24218000.8
(22) Anmeldetag: 06.12.2024
(51) Int. Cl.: G01L 1/24, G01N 21/21, G01N 21/23, G01L 5/00

(54) **VERFAHREN UND VORRICHTUNG ZUR MESSUNG VON OBERFLÄCHENSPANNUNGEN EINES OBJEKTS AUS EINEM DIELEKTRIKUM**

(71) Anmelder: Institut für Nanophotonik Göttingen e.V., 37077 Göttingen (DE)
(72) Erfinder: Ctistis, Georgios, 34131 Kassel (DE); Müller, Felix, 37075 Göttingen (DE); Wackerbarth, Hainer, 34131 Kassel (DE)
(74) Vertreter: REHBERG HÜPPE + PARTNER

(57) **Zusammenfassung**

Zum kontaktlosen Messen von mechanischen Oberflächenspannungen eines Objekts (3) aus einem Dielektrikum wird Licht (6) einer bekannten Einfallspolarisation unter einem festen Einfallswinkel (7) durch eine an die dem einfallenden Licht (6) zugewandte Oberfläche (2) des Objekts (3) angrenzende Atmosphäre hindurch auf die dem einfallenden Licht (6) zugewandte Oberfläche (2) des Objekts (3) gerichtet. Eine Ausfallspolarisation eines an der dem einfallenden Licht (6) zugewandten Oberfläche (2) von dem Objekt (3) unter einem dem festen Einfallswinkel (7) gleichen festen Ausfallswinkel (8) reflektierten Anteils (9) des Lichts (6) wird bestimmt, und aus der Ausfallspolarisation wird die Oberflächenspannung des Objekts (3) an der dem einfallenden Licht (6) zugewandten Oberfläche (2) im Auftreffbereich (10) des Lichts (6) auf die Oberfläche (2) ermittelt.

## Beschreibung

### TECHNISCHES GEBIET DER ERFINDUNG

Die Erfindung bezieht sich auf ein Verfahren zum Messen von Oberflächenspannungen eines Objekts aus einem Dielektrikum. Genauer bezieht sich die Erfindung auf ein Verfahren mit den Merkmalen des Oberbegriffs des unabhängigen Patentanspruchs 1.

Weiterhin bezieht sich die Erfindung auf eine Vorrichtung zur Durchführung eines solchen Verfahrens. Genauer bezieht sich die Erfindung auf eine Vorrichtung mit den Merkmalen des Oberbegriffs des Patentanspruchs 10. Letztlich bezieht sich die Erfindung auf konkrete Verwendungen der Vorrichtung zur Durchführung des Verfahrens.

Unter der Einwirkung einer mechanischen Spannung kann auch ein optisch isotropes Material doppelbrechend werden. Die vorliegende Erfindung nutzt diesen Effekt, der auch als Spannungsdoppelbrechung bezeichnet wird, oder eine Variation der doppelbrechenden Eigenschaften eines von Hause aus doppelbrechenden Materials aus, um auf zugrundeliegende mechanische Spannungen zu schließen.

### STAND DER TECHNIK

Aus der DE 10 2008 001 291 B3 ist ein Verfahren zur Bestimmung von Materialspannungen in hochhomogenen optischen Materialien mittels Messung der Spannungsdoppelbrechung bekannt. Ein aus dem hochhomogenen optischen Material bestehendes Objekt wird in einer Messvorrichtung positioniert. Mittels einer Lichtquelle wird linear polarisiertes Licht erzeugt. Das linear polarisierte Licht wird durch das Objekt geführt. Eine durch eine Materialspannung in dem Objekt verursachte Abweichung der Polarisation, konkret des Polarisationswinkels, des aus dem Objekt austretenden Lichts gegenüber dem in das Objekt eingestrahlten Licht wird bestimmt. Die Abweichung des Polarisationswinkels wird mit Hilfe einer Viertelwellenlängenplatte und eines linearen Polarisationsfilters als Analysator bestimmt. Die Messung der Spannungsdoppelbrechung erfolgt flächig unter Einsatz eines ortsauflösenden Detektors.

Bei diesem bekannten Verfahren handelt sich um ein Verfahren der Transmissionspolariskopie, bei dem die bestimmte Abweichung der Polarisation auf einem Integral der Materialspannungen in dem jeweiligen optischen Material über dem Weg des Lichts durch das optische Material entspricht.

Aus der US 2003/076487 A1 sind ein System und ein Verfahren zur Messung von Spannung in der Mittelebene von getemperten Glasplatten bekannt, welche Bragg-Streuung an einem Paar von thermischen Gittern nutzen. Die Gitter werden durch paralleles Schreiben von Strahlen aus Laserlicht, das durch das Glas rückreflektiert wird, geformt. Der Polarisationszustand des Lichts eines verzögerten Laserstrahl, der von diesen beiden thermischen Gittern gestreut wird, wird gemessen. Die Änderung der Polarisation des doppelgebrochenen Lichts zwischen den zwei Gittern wird mit der Spannung in der Mittelebene korreliert. Dieses komplexe Vorgehen dient speziell zum Messen der Spannung in der Mittelebene der getemperten Glasplatten.

Aus der US 11 573 078 B2 sind eine Vorrichtung und ein Verfahren zum Bestimmen des Brechungsindex, der zentralen Spannung oder des Spannungsprofils einer Probe bekannt. Zum Bestimmen eines geschätzten Spannungsprofils der Probe wird die Probe zwischen einem ersten Referenzblock mit einem ersten Brechungsindex und einem zweiten Referenzblock mit einem zweiten Brechungsindex angeordnet. Von einer ersten polarisationsschaltenden Lichtquelle wird ein erster polarisationsgeschalteter Lichtstrahl emittiert und durch ein Prisma und die Probe transmittiert, wobei der erste polarisationsgeschaltete Lichtstrahl längs eines ersten Strahlpfads verläuft, der unter einem in Wesentlichen senkrechten Auftreffwinkel auf eine Eingangsoberfläche des ersten Referenzblocks auftrifft, bevor er auf die Probe auftritt. Der transmittierte erste polarisationsgeschaltete Lichtstrahl wird detektiert, um ein Verzögerungsprofil der Probe zu bestimmen. Eine zentrale Spannung der Probe wird aus dem gemessenen Verzögerungsprofil der Probe bestimmt. Ein zweiter polarisationsgeschalteter Lichtstrahl wird von einer zweiten polarisationsschaltenden Lichtquelle emittiert. Der zweite polarisationsgeschaltete Lichtstrahl wird durch den ersten Referenzblock, die Probe und den zweiten Referenzblock transmittiert, wobei der zweite polarisationsgeschaltete Lichtstrahl längs eines zweiten Strahlpfads verläuft, der auf eine zweite Hauptoberfläche eines Probenhalters unter einem Winkel auftrifft, der bezogen auf eine Richtung normal zu der zweiten Hauptoberfläche des Probenhalters in einem Bereich von 10° bis 15° liegt, bevor er auf die Probe auftrifft. Der transmittierte zweite polarisationsgeschaltete Lichtstrahl wird detektiert, um ein detektiertes Signal zu bestimmen. Das detektierte Signal wird basierend auf Daten in dem detektierten Signal eingestellt, die dem ersten Referenzblock und dem zweiten Referenzblock entsprechen, um ein Brechungsindexprofil der Probe und daraus ein Spannungsprofil der Probe zu bestimmen. Aber auch dann, wenn hier ein Spannungsprofil der Probe bestimmt wird, beruhen die Messungen auf Einflüssen, die die polarisationsgeschalteten Lichtstrahlen im Volumen der Probe erfahren. Zudem muss die Probe mit den Referenzblöcken kontaktiert werden.

Aus der EP 0 076 651 B1 ist ein Polariskop bekannt, das in seinem Lichtweg die folgenden Bestandteile in dieser Reihenfolge aufweist: Eine Einrichtung zur Abgabe eines Eingangsstrahls aus polarisiertem Lieht, eine erste Viertelwellenlängenplatte, einen Probenhalter, eine zweite Viertelwellenlängenplatte und eine zweite Polarisierungseinrichtung parallel oder gekreuzt zu der ersten Polarisierungseinrichtung sowie eine elektrisch schaltbare erste Flüssigkristallzelle, welche in einem ersten Zustand den direkten Durchgang des polarisierten Eingangsstrahls ermöglicht, welche in einem zweiten Zustand die Polarisation des Eingangsstrahl um 45° dreht und welche zwischen der Einrichtung zur Abgabe des polarisierten Eingangsstrahls und der ersten Viertelwellenlängenplatte angeordnet ist, eine elektrisch schaltbare zweite Flüssigkristallzelle, welche in einem ersten Zustand den Durchtritt von senkrecht zur Polarisationsachse des Eingangsstrahls polarisiertem Licht ermöglicht, welche in einem zweiten Zustand die Polarisation des Lichts um 45° dreht und welche zwischen der zweiten Viertelwellenlängenplatte und der zweiten Polarisationseinrichtung angeordnet ist, und eine elektrische Schalteinrichtung für das Schalten der ersten und der zweiten Flüssigkristallzelle zwischen deren ersten und zweiten Zuständen. Die Richtung der Polarisation der zweiten Polarisationseinrichtung kann gegenüber dem polarisierten Eingangsstrahl in Winkel zwischen der parallelen und der gekreuzten Lage gedreht werden. Bei einer Ausführung dieses bekannten Polariskops als Reflektionspolariskop trifft der Eingangsstrahl nach der ersten Viertelwellenlängenplatte unter einem Einfallswinkel von 45° auf eine doppelbrechende Beschichtung auf einem opaken Testobjekt. Licht, das von der Beschichtung an der dem einfallenden Eingangsstrahl abgekehrten Grenzschicht zwischen der Beschichtung und dem Testobjekt unter einem Ausfallswinkel von 45° reflektiert wird, trifft dann auf die zweite Viertelwellenlängenplatte.

Mit dem Reflektionspolariskop erfasste Polarisationsdrehungen beruhen auf den doppelbrechenden Eigenschaften im von dem Licht durchlaufenden Volumen der doppelbrechenden Beschichtung. Die Oberflächenspannungen des Testobjekts werden also nicht direkt gemessen. Für die indirekte Messung mittels der doppelbrechenden Beschichtung muss diese auf das Testobjekt aufgebracht werden.

Aus der WO 2016/131396 A1 sind eine Vorrichtung mit den Merkmalen des Oberbegriffs des Patentanspruchs 10 und ein die Merkmale des Oberbegriffs des unabhängigen Patentanspruchs 1 aufweisendes Verfahren zum Detektieren von Oberflächenspannung bei einem Glas bekannt. Die Vorrichtung weist eine lichtdichte Abschirmung und innerhalb der lichtdichten Abschirmung eine Beleuchtungseinheit, ein Detektionsprisma und eine Abbildungseinheit auf. Das Detektionsprisma wird über eine Flüssigkeit mit einem solchen Brechungsindex in flächigen Kontakt mit dem Glas gebracht, dass Licht, welches von der Beleuchtungseinheit in das Prisma einfällt, unter einem Einfallswinkel von ca. 70° an der Kontaktfläche total reflektiert wird. Das Spannungsniveaus des Glases wird durch eine Doppelbrechung des totalreflektierten Lichts angezeigt, das durch die Glasoberfläche hindurchtritt. In der Abbildungseinheit wird die Polarisation des wieder aus dem Detektionsprisma auftretenden Lichts mit Hilfe eines polarisationsselektiven Elements bestimmt. Diese bekannte Vorrichtung und dieses bekannte Verfahren erfordern einen unmittelbaren flächigen Kontakt mit dem Glas und erfasst die Oberflächenspannungen des Glases nur qualitativ.

Aus dem Projektsteckbrief OMEGLAS.3 Optische Messung der Glaseigenspannung in drei Dimensionen, siehe https://www.photonikforschung.de/projekte/kmu-und-start-ups/projekt/ omeglas3.html, ist das Ziel bekannt, ein Messsystem zu entwickeln, das in der Lage ist, berührungsfrei die Oberflächenspannung von Glasscheiben flächig zu bestimmen, wobei die Oberfläche einer Glasscheibe optisch abgerastert und dabei die Spannung der Oberfläche bestimmt wird, um den Fertigungsprozess der Scheiben zu kontrollieren. Einzelheiten, wie dieses Ziel erreicht werden soll, gehen aus dem Projektsteckbrief nicht hervor.

Aus der DE 101 33 568 A1 ist Verfahren zum dreidimensionalen Vermessen und Digitalisieren eines Körpers, insbesondere für die Herstellung von Zahnersatz, bekannt. Der Körper wird in einer Halterung in einer definierten Orientierung eingespannt. Der Körper wird mittels einer Strahlungsquelle bestrahlt, und von dem Körper reflektiere Strahlung wird aufgenommen. Die reflektierte Strahlung wird durch eine Abtasteinheit ausgewertet, und eine Abstandsinformation wird erzeugt. Der Körper wird definiert relativ zu der Strahlungsquelle entlang einer Achse annährend senkrecht zur Bestrahlungsrichtung verfahren, und der Verfahrweg wird mit der Abstandinformation verknüpft.

### AUFGABE DER ERFINDUNG

Der Erfindung liegt die Aufgabe zugrunde, ein praktikables Verfahren zum kontaktlosen Messen von Oberflächenspannungen eines Objekts aus einem Dielektrikum mit den Merkmalen des Oberbegriffs des unabhängigen Patentanspruchs 1 sowie eine Vorrichtung zu dessen Durchführung und eine Verwendung dieser Vorrichtung aufzuzeigen, die bei Objekten aus Dielektrikum mit beliebig gekrümmten Oberflächen einsetzbar sind.

### LÖSUNG

Die Aufgabe der Erfindung wird durch ein Verfahren mit den Merkmalen des unabhängigen Patentanspruchs 1, eine Vorrichtung mit den Merkmalen des Patentanspruchs 10 und durch Verwendung mit den Merkmalen der Patentansprüche 14 oder 15 gelöst.

### BESCHREIBUNG DER ERFINDUNG

Bei einem erfindungsgemäßen Verfahren zum kontaktlosen Messen von mechanischen Oberflächenspannungen eines Objekts aus einem Dielektrikum wird Licht einer bekannten Einfallspolarisation unter einem festen Einfallswinkel durch eine Atmosphäre hindurch, die an eine Oberfläche des Objekts, welche dem einfallenden Licht zugewandt ist, auf die dem einfallenden Licht zugewandte Oberfläche des Objekts gerichtet. Von einem Anteil des Lichts, der an der dem einfallenden Licht zugewandten Oberfläche von dem Objekt unter einem festen Ausfallswinkel, welcher gleich dem festen Einfallswinkel ist, reflektiert wird, wird eine Ausfallspolarisation bestimmt, und aus der Ausfallspolarisation wird die Oberflächenspannung des Objekts an der dem einfallenden Licht zugewandten Oberfläche im Auftreffbereich des Lichts auf die Oberfläche ermittelt.

Der Einfallswinkel und der Ausfallswinkel werden hier in der üblichen Weise gegenüber einer Oberflächennormalen der Oberfläche in dem Auftreffbereich betrachtet. Der feste Einfallswinkel des Lichts impliziert, dass die Projektionseinrichtung kollimiertes Licht auf die Oberfläche des Objekts richtet. Die Atmosphäre ist eine gasförmige Umgebung beliebiger Zusammensetzung und beliebigen Drucks, der auch so klein sein kann, dass er als technisches Vakuum bezeichnet wird. Die "dem einfallenden Licht zugewandten Oberfläche" des Objekts wird hier auch als die "äußere Oberfläche" des Objekts bezeichnet. Soweit von einer Einfallspolarisation und einer Ausfallspolarisation des Lichts bzw. seines reflektierten Anteils die Rede ist, so sind die vorangestellten Angaben "Einfalls-" bzw. "Ausfalls-" nur einen Hinweis auf das Licht bzw. seinen reflektierten Anteil, das bzw. der diese Polarisation aufweist. Der Einfallswinkel und der Ausfallswinkel bzw. das unter dem Einfallswinkel einfallende Licht und der Anteil des Lichts, der an der äußeren Oberfläche unter dem Ausfallswinkel reflektiert wird, spannen eine Ebene auf, die hier in üblicher Weise als Einfallsebene bezeichnet wird.

Bei dem erfindungsgemäßen Verfahren kann die Oberflächenspannung qualitativ ermittelt werden, indem aus einer Änderung der Ausfallspolarisation gegenüber der Einfallspolarisation eine relative Größe der Oberflächenspannung des Objekts in dem Auftreffbereich des Lichts ermittelt wird. Weiterhin kann bei gleichbleibender Einfallspolarisation aus einer Änderung der Ausfallspolarisation ermittelt werden, dass sich die Oberflächenspannung des Objekts in dem Auftreffbereich des Lichts geändert hat. Aus der Größe der Änderung der Ausfallspolarisation kann auf eine relative Größe der Änderung der Oberflächenspannung geschlossen werden.

In der Detailbetrachtung wirkt sich die Oberflächenspannung des Objekts auf dessen doppelbrechenden Eigenschaften beim Reflektieren des einfallenden Lichts abhängig davon aus, wie sich die Oberflächenspannung auf die beiden längs der äußeren Oberfläche verlaufenden Spannungshauptachsen und die normal zur der äußeren Oberfläche verlaufende Spannungshauptachse verteilt. Die nach dem erfindungsgemäßen Verfahren aus der Ausfallspolarisation ermittelte Oberflächenspannung ist neben dieser Verteilung der Oberflächenspannung von der Einfallspolarisation und von der Ausrichtung der Einfallsebene zu den längs der äußeren Oberfläche verlaufenden Spannungshauptachsen des Objekts abhängig. Wenn die Ausrichtung der Einfallsebene zu den längs der äußeren Oberfläche verlaufenden Spannungshauptachsen bekannt ist, die Einfallspolarisation keine lineare Polarisation ist, die nur in der Einfallsebene oder nur normal zu der Einfallsebene verläuft, und die Ausfallspolarisation vollständig erfasst wird, können bereits bei einer einfachen Ausführung des erfindungsgemäßen Verfahrens alle Komponenten der Oberflächenspannung ermittelt werden. Bei unbekannter Ausrichtung der Einfallsebene zu den längs der äußeren Oberfläche verlaufenden Spannungshauptachsen ist das erfindungsgemäße Verfahren zweimal bei um einen Wert ungleich 90° unterschiedlichen und vorzugsweise um 45° unterschiedlichen Ausrichtungen der Einfallsebene zu den unbekannten Spannungshauptachsen auszuführen, um die Komponenten der Oberflächenspannung und die Orientierung der zugehörigen Spannungshauptachsen zu ermitteln. Auch dann darf die Einfallspolarisation keine lineare Polarisation sein, die nur in der Einfallsebene oder nur normal zu der Einfallsebene verläuft, und die Ausfallspolarisation muss vollständig erfasst werden.

Von dem aus der WO 2016/131396 A1 bekannten Verfahren unterscheidet sich das erfindungsgemäße Verfahren dadurch, dass das Licht unter dem festen Einfallswinkel durch eine Atmosphäre auf die äußere Oberfläche des Objekts gerichtet wird, wobei die Atmosphäre an die äußere Oberfläche des Objekts angrenzt. Anders gesagt handelt es sich bei dem erfindungsgemäßen Verfahren um ein kontaktloses Verfahren, das nicht nur keine direkte Berührung des gemessenen Objekts erfordert, sondern das deshalb auch an Objekten mit beliebig gekrümmten Oberflächen durchführbar ist, weil die Kontaktierung mit einem flächig an das Objekt anzulegenden Detektionsprisma entfällt. Es entfällt auch die Benetzung des Objekts mit der Flüssigkeit, deren Brechungsindex größer ist als derjenige des Objekts. Damit verzichtet das erfindungsgemäße Verfahren auf eine Totalreflektion des einfallenden Lichts an der äußeren Oberfläche des Objekts. Die Atmosphäre ist optisch immer weniger dicht als das Objekt.

Die äußere Oberfläche des Objekts, deren Oberflächenspannungen mit dem erfindungsgemäßen Verfahren gemessen werden, ist die oberste, gegenüber dem Rest des Objekts typischerweise nicht abgegrenzte Schicht mit einer Schichtdicke von der Größenordnung der Wellenlänge des Lichts. Spannungen im darunterliegenden Volumen des Objekts beeinflussen die erfindungsgemäße Messung der Oberflächenspannungen nicht.

Die bei dem erfindungsgemäßen Verfahren auf Grund der zu messenden Oberflächenspannung auftretenden Änderungen der Ausfallspolarisation gegenüber der Eingangspolarisation, die zum Messen der Oberflächenspannungen detektiert werden müssen, sind nur klein. Bei einem Spannungsunterschied von 0,5 MPa liegt ein typischer relativer Brechungsindexunterschied zwischen zwei Spannungshauptachsen des Objekts aus einem Dielektrikum bei 10⁻⁶. Die Reflexionskoeffizienten für unterschiedliche Polarisationsrichtungen des einfallenden Lichts hängen zusätzlich von dem Einfallswinkel und der Ausrichtung der Einfallsebene gegenüber den Hauptachsen ab. Die Ausfallpolarisation muss daher mit einer Genauigkeit von 10⁻⁶ oder besser bestimmt werden können, oder zumindest müssen relative Änderungen der Ausfallpolarisation von 10⁻⁶ erkannt werden, um auf die Oberflächenspannung zurückschließen zu können. Eine derart genaue Bestimmung der Ausfallspolarisation, so dass hieraus die interessierenden Oberflächenspannungen ermittelt werden können, ist mit Hilfe der im Folgenden erläuterten Techniken und Maßnahmen realisierbar.

Um bei dem erfindungsgemäßen Verfahren tatsächlich die interessierenden Oberflächenspannungen zu messen, kann ein weiterer Anteil des Lichts, der an einer dem einfallenden Licht abgewandten Oberfläche des Objekts reflektiert wird, von dem Anteil des Lichts, der an der dem einfallenden Licht zugewandten Oberfläche von dem Objekt reflektiert wird, abgetrennt werden. Die "dem einfallenden Licht abgewandte" Oberfläche des Objekts wird hier auch als die "rückwärtige" Oberfläche bezeichnet. Das Abtrennen kann beispielsweise durch einfaches Ausblenden oder Ablenken des weiteren Anteils des Lichts erfolgen, das bei parallelen reflektierenden Oberflächen zu dem an der äußeren Oberfläche reflektierten Anteil parallel versetzt ist. Eine weitere Ausfallspolarisation des weiteren Anteils des Lichts ist im Wesentlichen von der Spannungsdoppelbrechung im Volumen des Objekts beeinflusst und liefert entsprechend nicht die gewünschte Information über die interessierenden Oberflächenspannungen. Zudem ist die weitere Ausfallspolarisation des weiteren Anteils des Lichts durch die Spannungsdoppelbrechung im Volumen des Objekts viel stärker gegenüber der Einfallspolarisation verändert als die Ausfallspolarisation des an der dem einfallenden Licht zugewandten Oberfläche des Objekts reflektierten Anteils des Lichts. Daher geht in einer Überlagerung beider Anteile die kleinere Änderung der Ausfallspolarisation unter, die die Oberflächenspannungen anzeigt.

Es kann aber interessant sein, die weitere Ausfallspolarisation des weiteren Anteils des Lichts zu bestimmen und aus der weiteren Ausfallspolarisation eine weitere mechanische Spannung im Volumen des Objekts zwischen den Oberflächen im Umfeld eines weiteren Auftreffbereich des Lichts auf die dem einfallenden Licht abgewandte Oberfläche zu ermitteln.

Zum Bestimmen der Ausfallspolarisation des an der äußeren Oberfläche des Objekts reflektierten Anteils des Lichts, aber auch der weiteren Ausfallspolarisation kann mindestens eine Intensität mindestens eines Unteranteils des von dem Objekt reflektierten Anteils des Lichts gemessen werden, der eine bestimmte Polarisationsrichtung aufweist. Für eine qualitative Bestimmung der Oberflächenspannung des Objekts, d. h. für die Bestimmung, ob überhaupt eine Oberflächenspannung oder eine von einer Solloberflächenspannung ungleich null abweichende Oberflächenspannung vorliegt, kann das Bestimmen der Intensität eines einzigen Unteranteils ausreichend sein. Beispielsweise kann beobachtet werden, ob sich die Intensität eines Unteranteils des Lichts einer linearen Polarisationsrichtung, die die Ausfallspolarisation in dem Fall aufweist, dass eine Solloberflächenspannung im Auftreffbereich des Lichts auf die äußere Oberfläche vorliegt, ändert. Eine Änderung dieser Intensität weist auf eine von der Solloberflächenspannung abweichende Oberflächenspannung in dem Auftreffbereich des Lichts hin.

In einer Ausführungsform des erfindungsgemäßen Verfahrens werden die Intensitäten von zwei Unteranteilen des von dem Objekt reflektierten Anteils des Lichts gemessen, wobei der eine der zwei Unteranteile in der Einfallsebene des Lichts linear polarisiert ist und der andere der zwei Unteranteile senkrecht zu der Einfallsebene des Lichts linear polarisiert ist. Dies sind die beiden Unteranteile, die bei auftretenden Oberflächenspannungen in der Einfallsebene und dadurch induzierter Spannungsdoppelbrechung unterschiedlich stark reflektiert werden. Durch einen Vergleich der Intensitäten der beiden Unteranteile weist das erfindungsgemäße Verfahren eine erhöhte Messempfindlichkeit auf. Besonders hoch ist die Messempfindlichkeit, wenn die Intensitäten der beiden Unteranteile durch Drehen oder ganz allgemein Ändern der Einfallspolarisation und/oder durch Drehen oder ganz allgemein Ändern der Ausfallspolarisation für den Fall, dass in dem Auftreffbereich des Lichts eine Solloberflächenspannung vorliegt, miteinander abgeglichen oder ganz allgemein relativ zueinander abgestimmt werden, so dass die Differenz der Intensitäten der beiden Unteranteile null ist. Jede aufkommende Differenz weist dann hochempfindlich auf eine bestimmte Abweichung der Oberflächenspannung von der bekannten Solloberflächenspannung hin.

In einer anderen Ausführungsform des erfindungsgemäßen Verfahrens werden die Intensitäten von vier Unteranteilen des von dem Objekt reflektierten Anteils des Lichts gemessen, die unter Winkeln von 45° zueinander linear polarisiert sind. Auf diese Weise kann der die Ausfallpolarisation komplett beschreibende Stokes-Vektor des an der äußeren Oberfläche reflektierten Anteils des Lichts komplett bestimmt werden. Bei bekannten Stokes-Vektor des einfallenden Lichts, der auf gleiche Weise bestimmt werden kann, sind jegliche Unterschiede zwischen der Einfallspolarisation und der Ausfallspolarisation detektierbar.

Wenn bei dem erfindungsgemäßen Verfahren das Licht, das auf die Oberfläche gerichtet wird, bezüglich seiner Einfallsintensität und/oder seiner Einfallspolarisation moduliert wird, und/oder der von dem Objekt reflektierte Anteil des Lichts bezüglich seiner Ausfallsintensität und/oder seiner Ausfallspolarisation moduliert wird, kann die mindestens eine Intensität des mindestens einen Unteranteils abhängig von der Modulation auf eine solche Weise gemessen werden, dass nicht mit der Modulation korrelierte Signaländerungen und damit jegliches Signalrauschen stark unterdrückt wird. Diese Vorgehensweise ist dem Fachmann zur Verbesserung des Signals zu Rauschen-Verhältnisses grundsätzlich bekannt und wird typischerweise unter Verwendung eines Lock In-Verstärkers und/oder einer Phase Lock Loop implementiert.

Der Einfallswinkel des Lichts auf die äußere Oberfläche des Objekts beträgt bei dem erfindungsgemäßen Verfahren typischerweise zwischen 10° und 80° und dabei vorzugsweise mindestens 50°. Wenn das Dielektrikum des Objekts transparent ist und ein sogenannter Brewster-Winkel auftritt, bei dem der unter dem Ausfallswinkel reflektierte Anteil des Lichts nur eine senkrecht zu der Einfallsebene linear polarisierte Komponente, aber keine in der Einfallsebene linear polarisierte Komponente aufweist, dann ist der Einfallswinkel typischerweise ungleich diesem Brewster-Winkel und dabei vorzugsweise größer als dieser Brewster-Winkel. Ein Abstand des Einfallswinkels zu dem Brewster-Winkel von beispielsweise 0,5° schließt ein ungewolltes Zusammenfallen der beiden Winkel sicher aus. Bei der Reflektion von Licht am Übergang von Luft zu Glas liegt der Brewster-Winkel je nach Glassorte typischerweise zwischen 55° und 58°. Grundsätzlich kann das erfindungsgemäße Verfahren aber auch gezielt bei dem Brewster-Winkel durchgeführt werden, wobei die Intensität der linear in der Einfallsebene des Lichts polarisierten Komponente gemessen und eine auftretende Intensität als Hinweis darauf gewertet wird, dass die Brewster-Bedingung infolge der vorliegenden Oberflächenspannungen bei dem festen Ausfallswinkel nicht mehr eingehalten wird.

In einer Erweiterung des erfindungsgemäßen Verfahrens wird die äußere Oberfläche des Objekts mit dem Auftreffbereich des Lichts auf die Oberfläche abgetastet. Dabei kann das einfallende Licht quer zu seiner Einfallsebene aufgeweitet werden, sodass ein linienförmiger Auftreffbereich des Lichts auf die Oberfläche resultiert. Wenn dann die Ausfallspolarisation des reflektierten Anteils des Lichts mittels einer polarisationsempfindlichen Kamera bestimmt wird, kann dies mit Ortsauflösung längs des linienförmigen Auftreffbereichs erfolgen. Entsprechend können die aus der Ausfallspolarisation bestimmten Oberflächenspannungen längst des linienförmigen Auftreffbereichs örtlich aufgelöst werden. Eine polarisationsempfindliche Kamera weist typischerweise an jedem Bildpunkt vier Lichtsensoren auf, die auf Grund vorgeschalteter Polarisationsfilter jeweils für linear polarisiertes Licht einer bestimmten Polarisationsrichtung empfindlich sind, wobei, die vier Polarisationsrichtungen der vier Lichtsensoren unter Winkeln von 45° zueinander ausgerichtet sind. So wird mit der polarisationsempfindlichen Kamera der Stokes-Vektor in jedem Bildpunkt bestimmt.

Insbesondere beim Abtasten einer nicht ebenen äußeren Oberfläche des Objekts mit dem Auftreffbereich des Lichts auf die Oberfläche ist es wichtig, den Einfallswinkel des Lichts konstant zu halten, weil sonst die Ausfallspolarisation zusätzlich mit dem Einfallswinkel variiert. Zudem ist es praktisch erforderlich, einen Abstand, aus dem das Licht auf das Objekt gerichtet wird und in dem die Ausfallspolarisation des von dem Objekt reflektierten Anteils des Lichts bestimmt wird, beim Abtasten der Oberfläche des Objekts mit dem Auftreffbereich des Lichts auf die Oberfläche konstant zu halten, weil sich sonst der reflektierte Anteil des Lichts in der Einfallsebene parallel verschiebt, so dass er nicht mehr oder nicht mehr getrennt von einem weiteren Anteil des Lichts, der an einer rückwärtigen Oberfläche des Objekts reflektiert wird, erfasst wird.

Um den Einfallswinkel und den Abstand zu überprüfen und konstant zu halten, kann ein Pilotlichtstrahl unter einem Pilotstrahleinfallswinkel in einem Bereich von 10° bis 80° auf die dem einfallenden Licht zugewandte Oberfläche des Objekts gerichtet und die Richtung eines an der dem einfallenden Licht zugewandten Oberfläche von dem Objekt reflektierten Pilotstrahlanteils des Pilotlichtstrahls bestimmt werden. Dieses Bestimmen der Richtung des reflektierten Pilotstrahlanteils kann beispielsweise mit einem quer dazu ausgerichteten zweidimensionalen Lichtsensorarray erfolgen. Der Auftreffpunkt des reflektierten Pilotstrahlanteils auf das Lichtsensorarray zeigt zwar die Richtung des reflektierten Pilotstrahlanteils nicht direkt an; der Pilotstrahleinfallswinkel und der Abstand des Lichtsensorarrays zu der reflektierenden äußeren Oberfläche des Objekts lassen sich aber, wie noch beschrieben werden wird, mit Hilfe des zweidimensionalen Lichtsensorarray ermitteln.

Eine erfindungsgemäße Vorrichtung zur Durchführung des erfindungsgemäßen Verfahrens weist eine Projektionseinrichtung auf, die dazu ausgebildet ist, Licht einer bekannten Einfallspolarisation unter einem festen Einfallswinkel auf eine dem einfallenden Licht zugewandte Oberfläche des Objekts zu richten. Weiterhin weist die erfindungsgemäße Vorrichtung eine Analyseeinrichtung auf, die dazu ausgebildet ist, eine Ausfallspolarisation eines an der dem einfallenden Licht zugewandten Oberfläche von dem Objekt unter einem dem festen Einfallswinkel gleichen festen Ausfallswinkel reflektierten Anteils des Lichts zu bestimmen und aus der Ausfallspolarisation die Oberflächenspannung des Objekts an der dem einfallenden Licht zugewandten Oberfläche des Objekts im Auftreffbereich des Lichts auf die Oberfläche zumindest qualitativ zu ermitteln. Erfindungsgemäß sind die Projektionseinrichtung und die Analyseeinrichtung so zueinander ausgerichtet, dass ein Anteil des Lichts, das von der Projektionseinrichtung kommend unter dem festen Einfallswinkel in dem typischen Bereich von 10° und bis 80° durch eine an die dem einfallenden Licht zugewandte Oberfläche des Objekts angrenzende Atmosphäre hindurch auf die dem einfallenden Licht zugewandte Oberfläche des Objekts fällt, wobei der Anteil an der dem einfallenden Licht zugewandten Oberfläche von dem Objekt reflektiert wird, aber kein weiterer Anteil des Lichts, der an einer dem einfallenden Licht abgewandten Oberfläche des Objekts reflektiert wird, durch die Atmosphäre hindurch zu der Analyseeinrichtung gelangt. Es gelangt also nur der an der äußeren Oberfläche reflektierte Anteil, nicht aber der weitere Anteil des Lichts, der an der rückwärtigen Oberfläche des Lichts reflektiert wird, zu der Analyseeinrichtung, mit der die Oberflächenspannungen des Objekts an der dem einfallenden Licht zugewandten Oberfläche des Objekts ermittelt werden. Zu diesem Zweck kann der Analyseeinrichtung eine Blende zum Ausblenden des weiteren Anteils des Lichts oder eine Ablenkeinrichtung zur Ablenkung des weiteren Anteils des Lichts zu einer weiteren Analyseeinrichtung zugeordnet sein.

Die Projektionseinrichtung kann konkret eine vorzugsweise monochromatische Lichtquelle, insbesondere einen Laser, und einen Polarisator und/oder einen Polarisationsmodulator und/oder einen Intensitätsmodulator und/oder eine Viertelwellenplatte und/oder eine Halbwellenplatte aufweisen. Die Analyseeinrichtung kann konkret mindestens einen Lichtsensor und einen Polarisator und/oder einen Polarisationsstrahlteiler und/oder einen Polarisationsmodulator und/oder einen Intensitätsmodulator und/oder eine Viertelwellenplatte und/oder eine Halbwellenplatte aufweisen. Der Polarisator kann ein Polarisationsfilter aufweisen, das ausschließlich Licht einer definierten Polarisationsrichtung durchlässt. Der Polarisationsmodulator kann ein photoelastischer Modulator (PEM) sein. Der Intensitätsmodulator kann ein sogenannter Chopper mit einer rotierenden gelochten Platte sein, die das Licht intermittierend ausblendet und durch ihre Löcher durchlässt. Typischerweise weist die Vorrichtung nur einen Polarisationsmodulator oder Intensitätsmodulator in der Projektionseinrichtung oder der Analyseeinrichtung auf. Der Lichtsensor kann Teil eines Lichtsensorarrays sein. Die Viertelwellenplatte oder die Halbwellenplatte kann um die jeweilige optische Achse verdrehbar sein, insbesondere wenn sie mit einem Polarisationsstrahlteiler kombiniert wird. Mittels der Verdrehbarkeit können Intensitäten von durch den Polarisationsstrahlteiler getrennten Unteranteilen des Lichts, die zueinander orthogonale Polarisationsrichtungen aufweisen, miteinander abgeglichen werden.

Die erfindungsgemäße Vorrichtung kann eine Positioniereinrichtung aufweisen, die zum gemeinsamen Verfahren und Verschwenken der Projektionseinrichtung und der Analyseneinrichtung gegenüber dem Objekt ausgebildet ist. Dabei ist das gemeinsame Verfahren nicht nur längs der äußeren Oberfläche des Objekts zu realisieren, sondern auch quer dazu. Weiterhin ist zum Ausrichten der Projektionseinrichtung und der Analyseeinrichtung gegenüber dem Objekt eine zweiachsige Verschwenkbarkeit gegenüber der Oberfläche des Objekts zu realisieren, vorzugsweise um den tatsächlichen Auftreffpunkt oder den Sollauftreffpunkt des Lichts auf die äußere Oberfläche. Zusätzlich kann die Positioniereinrichtung zum gemeinsamen Verdrehen der Projektionseinrichtung und der Analyseeinrichtung um eine Oberflächennormale der äußeren Oberfläche des Objekts ausgebildet sein, um die Oberflächenspannungen in unterschiedlichen Einfallsebenen zu messen. Konkret können die Projektionseinrichtung und die Analyseeinrichtung mit einem mehrachsig verstellbaren Roboterarm gegenüber dem Objekt verfahren, verschwenkt und verdreht werden.

Um die Projektionseinrichtung und die Analyseeinrichtung, insbesondere bei einer gekrümmten Oberfläche für das erfindungsgemäße Verfahren exakt gegenüber der Oberfläche auszurichten, können ein Pilotstrahlprojektor und ein zweidimensionales Lichtsensorarray mit der Projektionseinrichtung und der Analyseeinrichtung verbunden sein. Der Pilotstrahlprojektor kann dazu ausgebildet sein, einen Pilotlichtstrahl unter einem Pilotstrahleinfallswinkel im Bereich von 10° und bis 65° auf die dem einfallenden Licht zugewandte Oberfläche des Objekts zu richten. Das Lichtsensorarray dazu angeordnet sein, einen Auftreffpunkt eines an der dem einfallenden Licht zugewandten Oberfläche von dem Objekt reflektierten Pilotstrahlanteils des Pilotlichtstrahls zu registrieren. Mit Hilfe des Pilotlichtstrahls und seines Auftreffpunkts auf das Lichtsensorarray kann die aktuelle Ausrichtung der Vorrichtung gegenüber dem Objekt bestimmt und dann in die Sollausrichtung überführt werden, die für die Durchführung des erfindungsgemäßen Verfahrens erforderlich ist. Damit der Pilotstrahl das erfindungsgemäße Verfahren nicht stört, kann er während der Durchführung des erfindungsgemäßen Verfahrens abgeschaltet werden. Indem eine Pilotstrahleinfallsebene des Pilotstrahls senkrecht zu einer Einfallsebene des Lichts verläuft und/oder indem sich der Pilotstrahleinfallswinkel von dem Einfallswinkel des Lichts um mindestens 10° unterscheidet, kann die Störung geometrisch verhindert werden. Wenn sich der Pilotlichtstrahl und das Licht um mindestens 50 nm in ihren Wellenlängen unterscheiden, können sie einfach durch Farbfilter voneinander getrennt werden.

Bei einer speziellen Verwendung der erfindungsgemäßen Vorrichtung wird die Positioniereinrichtung so angesteuert, dass die Projektionseinrichtung, die Analyseeinrichtung, der Pilotstrahlprojektor und das Lichtsensorarray gemeinsam über eine bestimmte Strecke in Richtung des Pilotlichtstrahls verlagert werden. Dann wird aus einer resultierenden Verlagerung des Auftreffpunkts des reflektierten Pilotstrahlanteils des Pilotlichtstrahls auf dem Lichtsensorarray ein tatsächlicher Pilotstrahleinfallswinkel auf die äußere Oberfläche des Objekts bestimmt. Weiterhin kann aus dem tatsächlichen Pilotstrahleinfallswinkel und einer Lage des Auftreffpunkts des reflektierten Pilotstrahlanteils des Pilotlichtstrahls auf dem Lichtsensorarray ein tatsächlicher Abstand des Pilotstrahlprojektors zu einem Pilotstrahlauftreffbereich bestimmt werden, in dem der Pilotlichtstrahl auf die Oberfläche des Objekts auftrifft. Unter Nutzung dieser Kenntnisse kann die Positioniereinrichtung so angesteuert werden, dass die Projektionseinrichtung, die Analyseeinrichtung, der Pilotstrahlprojektor und das Lichtsensorarray so gegenüber der Oberfläche angeordnet und ausgerichtet werden, dass der tatsächliche Pilotstrahleinfallswinkel einem Sollpilotstrahleinfallswinkel und der tatsächliche Abstand einem Sollabstand des Pilotstrahlprojektors zu dem Pilotstrahlauftreffbereich entspricht. Der Sollpilotstrahleinfallswinkel und der Sollabstand sind so zu wählen, dass dann, wenn sie eingehalten werden, der Pilotstrahlauftreffbereich mit dem Auftreffbereich des Lichts auf die Oberfläche zusammenfällt. Dieses Konzept kann auf unterschiedliche konkrete Weisen umgesetzt werden, die sich dadurch unterscheiden können, ob um den tatsächlichen Pilotstrahlauftreffbereich oder einen Sollpilotstrahlauftreffbereich verschwenkt wird, um den tatsächlichen Piloteinfallswinkel an den Sollpilotstrahleinfallswinkel heranzuführen. Wenn nicht um dem aktuellen Pilotstrahlauftreffpunkt des Pilotstrahls auf die reflektierende äußere Oberfläche des Objekts verschwenkt wird, wandert der Pilotstrahlauftreffpunkt beim Drehen über die Oberfläche. Umgekehrt mag der aktuelle Pilotstrahlauftreffpunkt nicht der Punkt der Oberfläche sein, an dem die Oberflächenspannung gemessen werden soll. Außerdem können sich die verschiedenen Umsetzungen der geschilderten Strategie dadurch unterscheiden, ob eine Abweichung des tatsächlichen Pilotstrahleinfallswinkels von dem Sollpilotstrahleinfallswinkel nur in einer Ebene betrachtet wird, die einer Sollpilotstrahleinfallsebene entspricht, oder auch senkrecht dazu.

Eine Abweichung der tatsächlichen Pilotstrahleinfallswinkel von dem Sollpilotstrahleinfallswinkel senkrecht zu dieser Sollpilotstrahleinfallsebene kann auch separat kompensiert werden, indem die Positioniereinrichtung mit dem Ziel angesteuert wird, dass der Auftreffpunkt des reflektierten Pilotstrahlanteils des Pilotlichtstrahls auf das Lichtsensorarray in der Pilotstrahlsolleinfallsebene liegt. Dazu sind die Projektionseinrichtung, die Analyseeinrichtung, der Pilotstrahlprojektor und das Lichtsensorarray gemeinsam um eine in der Pilotsolleinfallsebene verlaufende Schwenkachse zu verschwenken, die möglichst nahe bei dem Pilotstrahlauftreffpunkt auf die äußere Oberfläche des Objekts liegt und tangential zu der äußeren Oberfläche verläuft. Praktisch kann das Verschwenken um eine Schwenkachse erfolgen, die längs einer virtuellen Verbindungslinie zwischen dem Pilotstrahlprojektor und dem Lichtsensorarray durch den Pilotstrahlauftreffpunkt verläuft, dessen Position durch den tatsächlichen Abstand des Pilotstrahlprojektors zu der Oberfläche bekannt ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Lichtsensorarray die Rede ist, ist dies so zu verstehen, dass genau ein Lichtsensorarray, zwei Lichtsensorarrays oder mehr Lichtsensorarrays vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführung der erfindungsgemäßen Vorrichtung bei der Durchführung einer ersten Ausführungsform des erfindungsgemäßen Verfahrens.
- **Fig. 2 bis 9**: zeigen weitere erfindungsgemäße Vorrichtungen bei der Ausführung weiterer Ausführungsformen des erfindungsgemäßen Verfahrens.
- **Fig. 10**: zeigt noch eine weitere Ausführungsform der erfindungsgemäßen Vorrichtung bei der Ausführung noch einer weiteren Ausführungsform des erfindungsgemäßen Verfahrens, wobei zusätzlich eine Positioniereinrichtung der Vorrichtung angedeutet ist.
- **Fig. 11**: illustriert einen ersten Schritt beim Anfahren eines neuen Abtastpunkts während des Abtastens einer äußeren Oberfläche eines Objekts mit einer erfindungsgemäßen Vorrichtung; und
- **Fig. 12 bis 14**: illustrieren eine Ausrichtung der Vorrichtung gegenüber der äußeren Oberfläche des Objekts an dem neuen Abtastpunkt, wobei die Ausrichtung unter erfindungsgemäßer Verwendung der erfindungsgemäßen Vorrichtung erfolgt.

### FIGURENBESCHREIBUNG

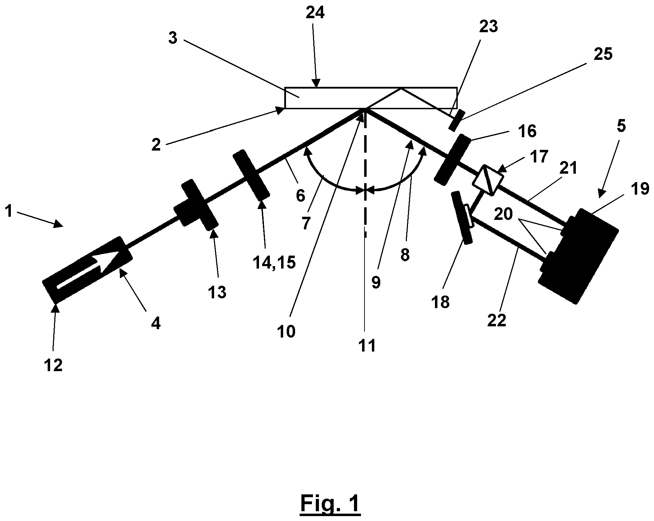

Die in **Fig. 1** illustrierte Vorrichtung 1 zum kontaktlosen Messen von mechanischen Oberflächenspannungen an einer äußeren Oberfläche 2 eines lichtreflektierenden Objekts 3 aus einem Dielektrikum weist eine Projektionseinrichtung 4 und eine Analyseeinrichtung 5 auf. Die Projektionseinrichtung 4 richtet Licht 6 einer bekannten Einfallspolarisation unter einem festen Einfallswinkel 7 durch eine angrenzende Atmosphäre auf die äußere Oberfläche 2 des Objekts 3. Die Analyseeinrichtung 5 bestimmt eine Ausfallspolarisation eines an der äußeren Oberfläche 2 von dem Objekt 3 unter einem den festen Einfallswinkel 7 gleichen Ausfallswinkel 8 reflektierten Anteils 9 des Lichts 6. Das Bestimmen der Ausfallspolarisation im Vergleich zur Einfallspolarisation dient dazu, die mechanischen Oberflächenspannung des Objekts 3 an der äußeren Oberfläche 2 im Auftreffbereich 10 des Lichts 6 auf die äußere Oberfläche 2 zu ermitteln. Die Ermittlung der Oberflächenspannung aus der Polarisationsänderung bei der Reflektion des Lichts 6 erfolgt auf eine dem Fachmann grundsätzlich bekannte Art und Weise.

Der Einfallswinkel 7 und der Ausfallswinkel 8 werden hier in der üblichen Weise gegenüber einer Oberflächennormalen 11 der äußeren Oberfläche 2 in dem Auftreffbereich 10 betrachtet. Die Einfallsebene des Lichts 6 auf die Oberfläche 2 ist die Zeichenebene von Fig. 1. Soweit hier von der Einfallspolarisation und der Ausfallspolarisation des Lichts 6 bzw. seines reflektierten Anteils 9 die Rede ist, so weisen die vorangestellten Angaben "Einfalls-" bzw. "Ausfalls-" nur auf das Licht 6 bzw. seinen reflektierten Anteil 9 hin, das bzw. der diese Polarisation aufweist.

Die Projektionseinrichtung 4 gemäß Fig. 1 weist einen Laser 12 als monochromatische Lichtquelle, einen Polarisator 13 zur Festlegung der Eingangspolarisation und einen photoelastischen Modulator 14 als Polarisationsmodulator 15 auf. Der Polarisator polarisiert das Licht 6 linear. Der Polarisationsmodulator 15 dient zur dynamischen Modulation der Eingangspolarisation. Die Analyseeinrichtung 5 gemäß Fig. 1 weist eine Halbwellenplatte 16, einen Polarisationsstrahlteiler 17, einen Spiegel 18 und einen Differenzsensor 19 mit zwei Lichtsensoren 20 für die beiden Unteranteile 21 und 22 auf, in die der Polarisationsstrahlteiler 17 den an der äußeren Oberfläche 2 reflektierten Anteil 9 des Lichts 6 aufteilt. In Fig. 1 und in folgenden Figuren sind Linsen und Blenden zum Einstellen eines Strahldurchmessers des Lichts 6 und damit einer Größe des Auftreffbereichs 10 auf der Oberfläche 2 nicht dargestellt. Dargestellt ist jedoch, dass ein weiterer Anteil 23 des Lichts 6, der an einer rückwärtigen Oberfläche 24 des Objekts 3 reflektiert wird, von dem Anteil 9 separiert und einer Strahlfalle 25 zugeführt wird. Grundsätzlich könnte für den weiteren Anteil 23 statt der Strahlfalle 25 eine weitere Analyseeinrichtung vorgesehen sein, um zusätzlich mechanische Spannungen im Volumen des Objekts zu ermitteln.

In der Analyseeinrichtung 5 können durch Verdrehen der Halbwellenplatte 16 um die optische Achse die Intensitäten der Unteranteile 21 und 22, die von den Lichtsensoren 20 registriert werden, abgeglichen werden, sodass ihre Differenz bei der Einfallspolarisation des Lichts 6 und keiner oder einer bestimmten Oberflächenspannung in dem Auftreffbereich 10 null ist. Jedes anschließende Auftreten einer Differenz weist dann auf eine bestimmte andere Oberflächenspannung in dem Auftreffbereich 10 hin. Dabei kann mit Hilfe des Polarisationsmodulators 15 die Eingangspolarisation dynamisch moduliert werden und die Differenz der von den Lichtsensoren 20 erfasste Intensitäten der Unteranteile 21 und 22 in Bezug auf diese Modulation phasenselektiv erfasst werden, um das Signal zu Rauschen-Verhältnis bei der gemessenen Differenz der Intensitäten zu minimieren. Konkret kann die Eingangspolarisation des Lichts 6 mit dem PEM 14 zwischen linearer, zirkularer und elliptischer Polarisation moduliert werden

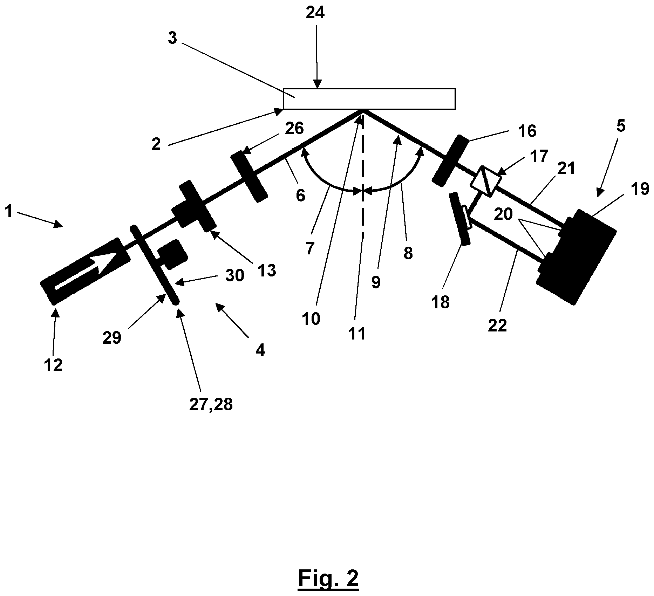

**Fig. 2** zeigt eine Variation der Vorrichtung gemäß Fig. 1 im Bereich der Projektionseinrichtung 4. Mit einer Viertelwellenplatte 26 wird die Eingangspolarisation des Lichts 6 zirkular oder elliptisch eingestellt. Statt des Polarisationsmodulators 15 ist ein Intensitätsmodulator 27 in Form eines sogenannten Choppers 28 vorgesehen, der die Intensität des Lichts 6 dynamisch moduliert. Der Chopper 28 weist eine Lochscheibe 29 auf, die von einem Motor 30 in Ihrer Scheibenebene gedreht wird und die je nach Drehstellung das Licht 6 von dem Laser 12 durchlässt oder nicht. Die Intensitätsmodulation des Lichts 6 kann ebenso wie die Polarisationsmodulation des Lichts zur Unterdrückung des Signal zu Rauschen-Verhältnisses bei der mit dem Differenzsensor 10 bestimmten Differenz der Intensitäten der Unteranteile 21 und 22 genutzt werden.

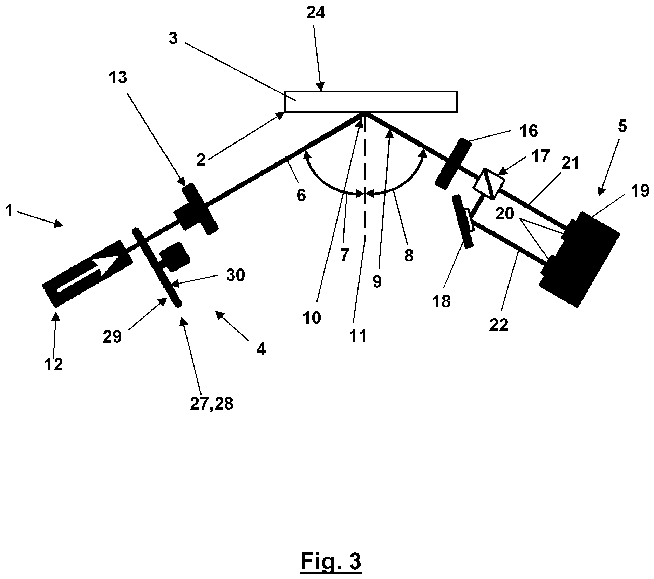

Die Vorrichtung gemäß **Fig. 3** unterscheidet sich von derjenigen gemäß Fig. 2 durch ein Fehlen der Viertelwellenplatte 26, sodass das Licht 6 nach dem Polarisator 13 die durch diesen vorgegebene lineare Einfallspolarisation aufweist.

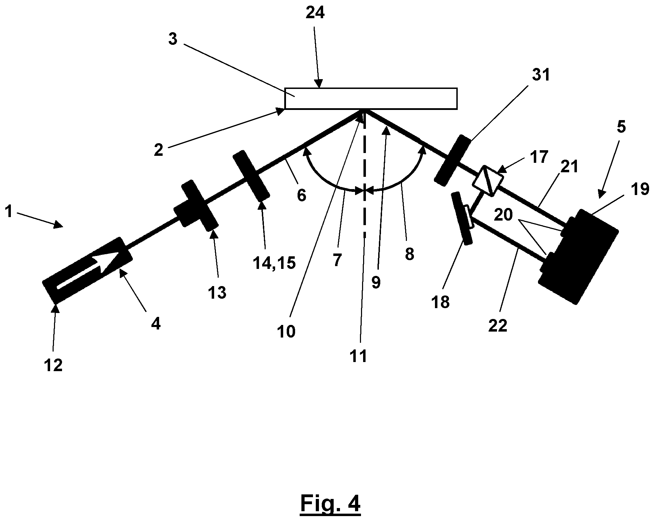

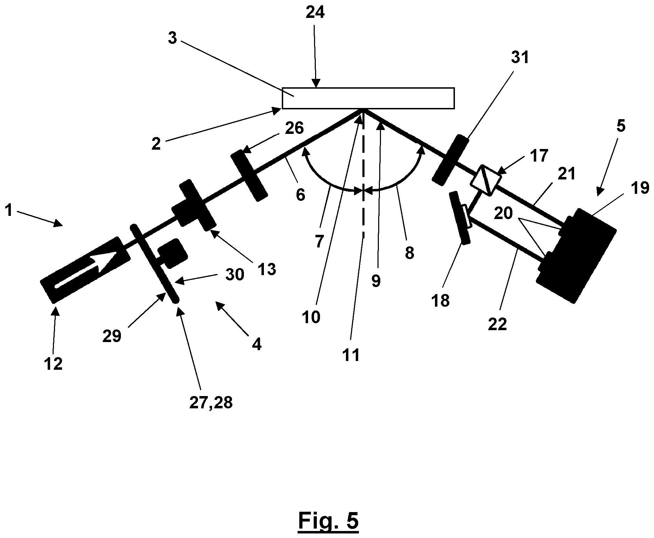

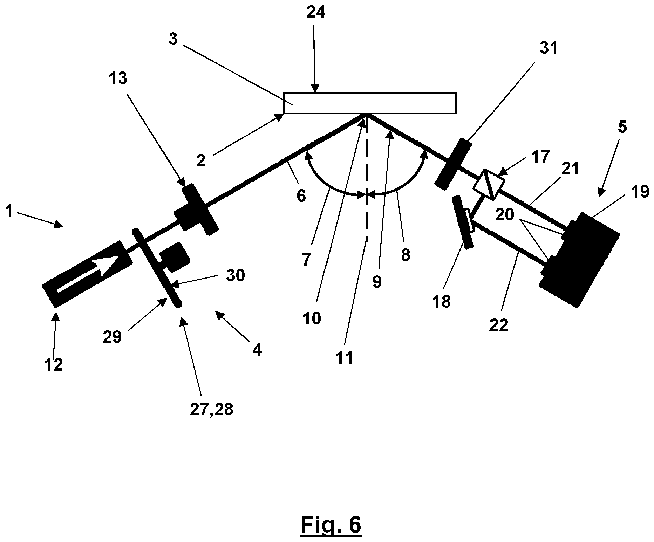

Die in den **Fig. 4 bis 6** dargestellten Ausführungsformen der Vorrichtung 1 unterscheiden sich von denjenigen gemäß den Fig. 1 bis 3, außer dadurch dass in Fig. 4 die Strahlfalle gemäß Fig. 1 weggelassen ist, auch dadurch, dass die Analyseeinrichtung 5 statt der Halbwellenplatte 16 eine Viertelwellenplatte 31 aufweist. Die Viertelwellenplatte 31 wird während der Ermittlung der Ausfallspolarisation des Anteils 9 des Lichts um die optische Achse verdreht, um die Drehlage der Viertelwellenplatte 31 zu bestimmen, bei der die Differenz der mit den Lichtsensoren 20 bestimmten Intensitäten der Unteranteile 21 und 22 ein Minimum oder auch ein Maximum aufweist. Dabei kann zur genauen Bestimmung der Drehlage der Viertelwellenplatte 31 bei dem Minimum bzw. Maximum ein Fit an die Differenz der Intensitäten über den Drehlagen der Viertelwellenplatte 31 um die optische Achse durchgeführt werden. Die Drehlage der Viertelwellenplatte 31 bei dem Minimum bzw. Maximum ist abhängig von der aktuellen Ausfallspolarisation des Anteils 9 und damit von der Änderung dieser Ausfallspolarisation gegenüber der Einfallspolarisation, wobei die genaue Drehlage der Viertelwellenplatte 31 bei dem Minimum bzw. des Maximum die aktuelle Ausfallspolarisation bezüglich der Phasenverzögerung ihrer Polarisationsanteile genau anzeigt.

Wenn bei den in den Fig. 4 bis 6 dargestellten Ausführungsformen der Vorrichtung 1 und deren voranstehend beschriebener Verwendung die drehbare Viertelwellenplatte 31 durch die drehbare Halbwellenplatte 16 gemäß den Fig. 1 bis 3 ersetzt wird, wird mit der Bestimmung der Drehlage der Halbwellenplatte 16, bei der die Differenz der mit den Lichtsensoren 20 bestimmten Intensitäten der Unteranteile 21 und 22 zu null wird, zwar - ähnlich wie bei der in den Fig. 4 bis 6 dargestellten Ausführungsformen der Vorrichtung 1 und deren voranstehend beschriebener Verwendung - ausschließlich die Differenz der Polarisationsanteile der Ausfallspolarisation bestimmt, dies aber mit hoher Genauigkeit.

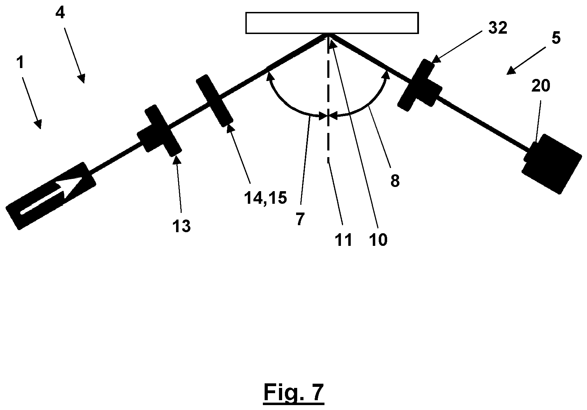

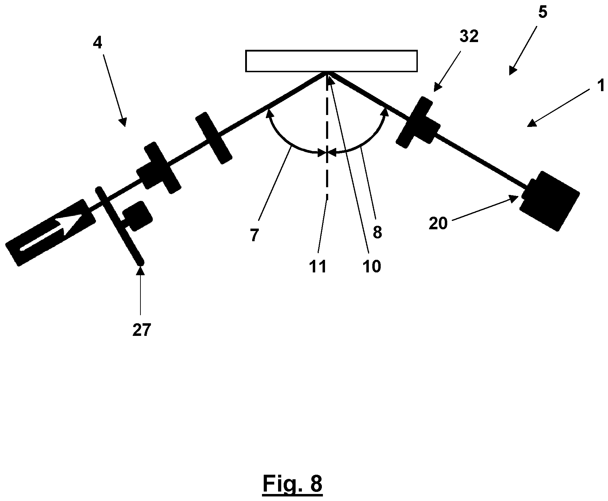

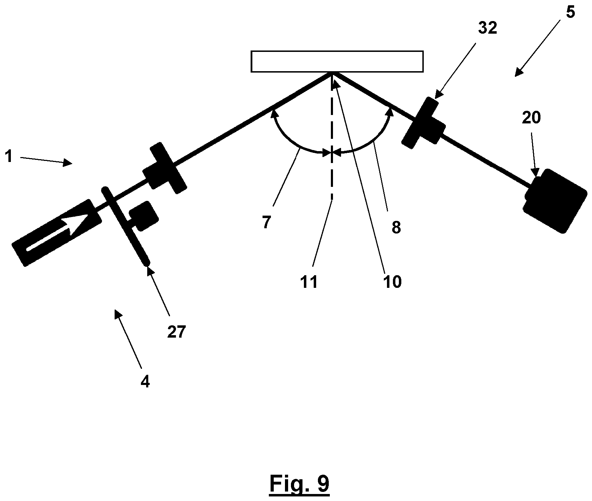

Bei den Ausführungsformen der erfindungsgemäßen Vorrichtung gemäß den **Fig. 7 bis 9** ist die Analyseeinrichtung 5 jeweils anders konzipiert als bei den Ausführungsformen gemäß den Fig. 1 bis 3 bzw. 4 bis 6. Die Projektionseinrichtungen 4 gleichen hingegen denjenigen in den entsprechenden vorhergehenden Figuren. Die Analyseeinrichtungen 5 gemäß den Fig. 7 bis 9 weisen jeweils einen Lichtsensor 20 mit vorgeschalteten Polarisator 32 auf. Durch Einstellen der Durchlassrichtung des Polarisators 32 derart, dass er nacheinander vier paarweise unter 45° zueinander orientierte Durchlassrichtungen aufweist, werden mit dem Lichtsensor 20 alle Anteile des Polarisationszustands vollständig und eindeutig bestimmt, das heißt der komplette Stokes-Vektor des Polarisationszustands. Hieraus sind dann eindeutige Rückschlüsse auf die Oberflächenspannung der Oberfläche 2 des Objekts 3 in dem Auftreffbereich 10 möglich.

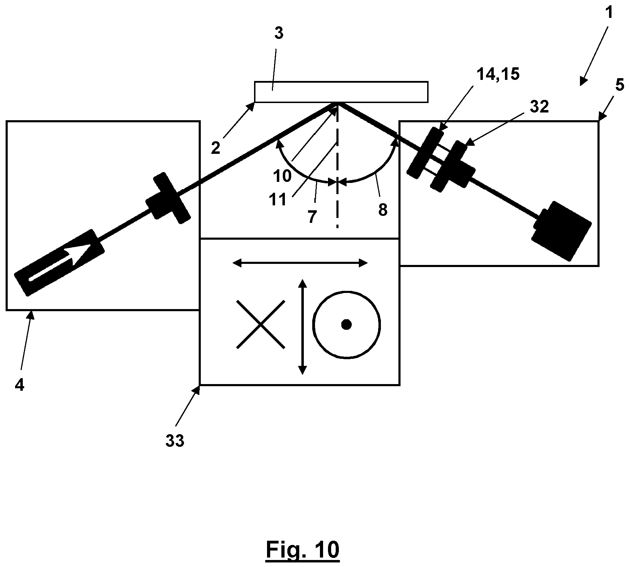

Bei der Ausführungsform der Vorrichtung 1 gemäß **Fig. 10** ist anders als bei der Ausführungsform gemäß Fig. 7 der photoelastische Modulator 14 als Polarisationsmodulator 15 nicht dem Polarisator 13 in der Projektionseinrichtung 4 nachgeschaltet, sondern dem Polarisator 32 in der Analyseeinrichtung 5. Dies weist darauf hin, dass die Polarisationsmodulation zur Verbesserung des Signals zu Rauschen-Verhältnisses mit Hilfe eines Lock In-Verstärkers statt an dem Licht 6 auch an dessen reflektierten Anteil 9 durchgeführt werden kann. Dies gilt im Übrigen auch für die aus gleichen Gründen durchgeführte Intensitätsmodulation mit Hilfe des Intensitätsmodulators 27.

Bei allen Ausführungsformen der Vorrichtung 1 gemäß den Fig. 7 bis 10 kann die Kombination des Polarisators 32 mit dem Lichtsensor 20 durch einen polarisationsempfindlichen Lichtsensor mit vier Teilsensoren in jedem Bildpunkt ersetzt werden, denen jeweils ein Polarisator vorgeschaltet ist, wobei die Durchlassrichtungen der Polarisatoren unter 45° zueinander stehen, das heißt Polarisatorstellungen von 0°, 45°, 90° und 180° aufweisen.

In Fig. 10 ist weiterhin eine Positioniereinrichtung 33 angedeutet, mit der die Projektionseinrichtung 4 und die Analyseeinrichtung 5 gemeinsam gegenüber der äußeren Oberfläche 2 des Objekts 3 verfahrbar sind, und zwar sowohl in beiden Richtungen längs der äußeren Oberfläche 2 als auch quer dazu, um immer den Abstand der Vorrichtung 1 gegenüber der äußeren Oberfläche 2 konstant zu halten. Darüber hinaus ist die Vorrichtung mit der Positioniereinrichtung 33 um den Auftreffbereich 10 verschwenkbar, um die Vorrichtung 1 an unterschiedliche Neigungen oder Krümmung der äußeren Oberfläche 2 anzupassen. Darüber hinaus ist die Vorrichtung 1 mit Positioniereinrichtung 33 um die Oberflächennormale 11 verdrehbar, um die Oberflächenspannungen der Oberfläche 2 in unterschiedliche Richtungen, das heißt in unterschiedlichen Einfallsebenen des Lichts 6 zu erfassen.

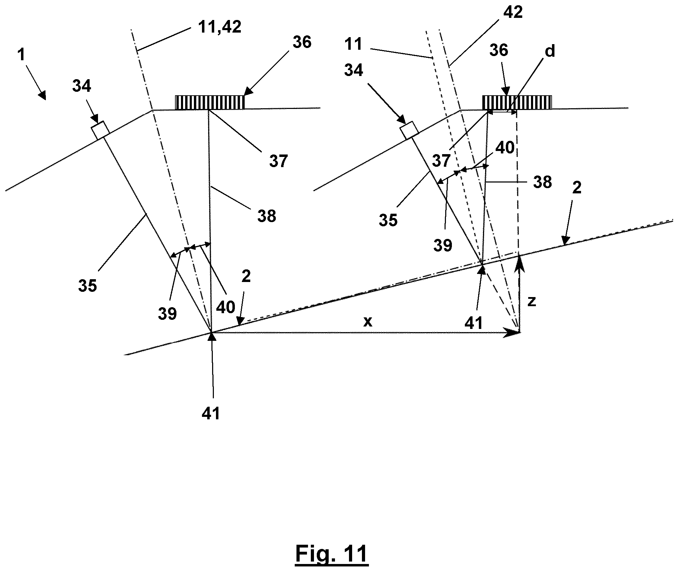

Um das Positionieren der Vorrichtung 1 gegenüber der Oberfläche zu unterstützen oder auch zu automatisieren, kann die Vorrichtung 1, wie in **Fig. 11** angedeutet ist, einen Pilotstrahlprojektor 34 zum Projizieren eines Pilotlichtstrahls 35 und ein zweidimensionales Lichtsensorarray 36 zum Registrieren eines Auftreffpunkts 37 eines an der Oberfläche 2 reflektierten Pilotstrahlanteils 38 des Pilotlichtstrahls 35 aufweisen. Ein Pilotstrahleinfallswinkel 39 und ein Pilotstrahlausfallswinkel 40 gegenüber der Oberflächennormalen 11 können dabei in dieselbe Einfallsebene fallen wie der Einfallswinkel 7 und der Ausfallswinkel 8 gemäß den Figuren 1 bis 10. Dann ist der Pilotstrahleinfallswinkel 39 vorzugsweise signifikant kleiner als der Einfallswinkel 7. Stattdessen kann die Pilotstrahleinfallsebene, die die Zeichenebene der Fig. 11 ist, senkrecht zu der Einfallsebene des Lichts 6 verlaufen, die die Zeichenebene der Figuren 1 bis 10 ist.

Wenn der Pilotstrahleinfallswinkel 39 gleich einem Sollpilotstrahleinfallswinkel ist und ein Abstand des Pilotstrahlprojektors 34 zu der Oberfläche 2 in Richtung des Pilotlichtstrahls 35 gleich einem Sollabstand ist, wobei der Auftreffpunkt 37 des Pilotstrahlanteils 38 eine Sollposition in der Mitte des Lichtsensorarrays 36 hat, fällt ein Pilotstrahlauftreffbereich 41 des Pilotlichtstrahls 35 auf die Oberfläche 2 mit dem in den Figuren 1 bis 10 gezeigten Auftreffbereich 10 des Lichts 6 auf die Oberfläche 2 zusammen und sind auch die Projektionseinrichtung und die Analyseeinrichtung korrekt gegenüber der Oberfläche 2 ausgerichtet. Wenn der Pilotstrahleinfallswinkel 39 hingegen nicht gleich dem Sollpilotstrahleinfallswinkel ist oder ein Abstand des Pilotstrahlprojektors 34 zu der Oberfläche 2 in Richtung des Pilotlichtstrahls 35 nicht gleich dem Sollabstand ist, sind auch die Projektionseinrichtung und die Analyseeinrichtung nicht korrekt gegenüber der Oberfläche 2 ausgerichtet. Das Lichtsensorarray zeigt dann eine Abweichung des Auftreffpunkts 37 von seiner Sollposition an, die von einer Steuerung der Positioniereinrichtung 33 gemäß Fig. 10 verwendet werden kann, um die Ausrichtung der Vorrichtung 1 gegenüber der Oberfläche 2 zu korrigieren. Da aber zwei Kippwinkel, das sind die Komponenten des Pilotstrahlstrahleinfallswinkel 39 in der Zeichenebene gemäß Fig. 11 und bei daraus verkippter Oberflächennormalen 11 senkrecht zu der Zeichenebene gemäß Fig. 11 und der Abstand des Pilotstrahlprojektors 34 zu der Oberfläche 2 bestimmt werden müssen, reichen die zwei Richtungen, in denen das zweidimensionale Lichtsensorarray 36 die Abweichung bestimmen kann, nicht aus.

Um alle Größen bestimmen zu können, kann ein zweites Paar aus einem weiteren Pilotstrahlprojektor und einem weiteren zweidimensionalen Lichtsensorarray mit einer anderen Pilotstrahleinfallsebene verwendet werden oder die Pilotstrahleinfallsebene des Pilotstrahlprojektors 34 und des zweidimensionalen Lichtsensorarrays 36 gemäß Fig. 11 wird um die Oberflächennormale 11 um 90° gedreht. Als weitere Möglichkeit kann der anhand Fig. 11 und den folgenden Figuren erläuterte Algorithmus verwendet werden.

In Fig. 11, rechts ist die Vorrichtung 1 mit dem Pilotstrahlprojektor 34 und dem zweidimensionalen Lichtsensorarray 36 gegenüber einer Position x₀ und z₀ in Figur 11, links um eine Strecke x nach rechts verschoben. Über diese Strecke x steigt die Oberfläche 2 in der Höhe um z auf z₀ + z an. Zudem ist die Neigung der Oberfläche 2 in Fig. 11, rechts eine andere als in Fig. 11, links. Hierdurch ändern sich der Abstand des Pilotstrahlprojektors 36 zu der Oberfläche 2 sowie der Pilotstrahleinfallswinkel 39 und der Pilotstrahlausfallswinkel 40. In der Folge verschiebt sich der Auftreffpunkt 37 des Pilotstrahlanteils 38 auf dem zweidimensionalen Lichtsensorarray 36, um eine Strecke d nach links. Ein Sensorlot 42, das ist eine gegenüber der Vorrichtung 1 feste Achse, die bei korrekter Ausrichtung der Vorrichtung 1 gegenüber der Oberfläche 2, wenn also der Pilotstrahleinfallswinkel 35 dem Sollpilotstrahleinfallswinkel entspricht und der Abstand des Pilotstrahlprojektors 34 zu der Oberfläche 2 dem Sollabstand entspricht, mit der Oberflächennormale 11 durch den Pilotstrahlauftreffbereich 41 zusammenfällt, weicht aufgrund der Fehlausrichtung der Vorrichtung 1 gegenüber der Oberfläche 2 von dieser Oberflächennormale 11 ab. Zudem ist der tatsächliche Pilotstrahlauftreffbereich 41 gegenüber seiner Sollposition (x₀ + x) versetzt.

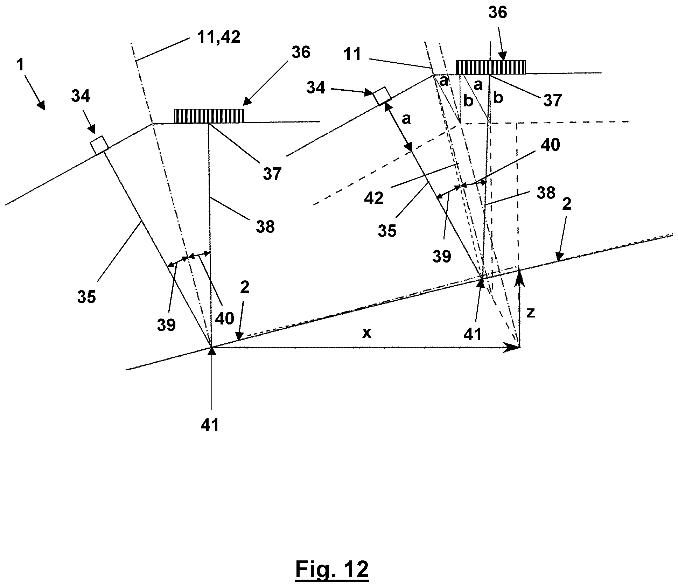

Wenn jetzt gemäß dem rechten Teil von **Fig. 12** (der linke Teil von Fig. 12 und der folgenden Figuren ist identisch mit dem linken Teil von Fig. 11) der Pilotstrahlprojektor 34 aus seiner mit gestrichelter Linie angedeuteten Position längs des Pilotlichtstrahls 35 um eine Strecke a von der Oberfläche 2 entfernt wird, beispielsweise bis in die mit durchgezogener Linie dargestellte Position, in der der Auftreffpunkt 37 des Pilotstrahlanteils 38 wieder seine Sollposition in der Mitte des Lichtsensorarrays 36 erreicht, dann ist der Quotient d/a aus der kompensierten ursprünglichen Verschiebung des Auftreffpunkts 37 auf dem Lichtsensorarray 36 um die Strecke d und der Strecke a gleich dem Tangens von 2ζ, wobei ζ der tatsächliche Pilotstrahleinfallswinkel 39 ist. d/a = tan 2ζ gilt auch dann, wenn der Auftreffpunkt 37 nicht bis in seine Sollposition in der Mitte des Lichtsensorarrays 36 zurückgeführt wird, das heißt für jede aus der Verlagerung des Pilotstrahlprojektors 34 längs des Pilotlichtstrahls 35 um eine Strecke a resultierende Verlagerung des Auftreffpunkts 37 auf dem Lichtsensorarray 36 um eine Strecke d. d/a = tan 2ζ gilt aber nur für ein Lichtsensorarray 36, das - anders als in den Figuren 11 und 12 dargestellt - unter einem rechten Winkel zu dem Pilotlichtstrahl 35 verläuft. In den Figuren 11 und 12 ist das Lichtsensorarray 36 um einen Winkel 2α gegenüber dem rechten Winkel zu dem Pilotlichtstrahl 35 hin geneigt, wobei α der Sollpiloteinfallswinkel ist. Daher gilt tan(2ζ-2α) = c/b, wobei (2ζ-2α) die doppelte Abweichung des tatsächlichen Piloteinfallswinkels 39 von dem Sollpiloteinfallswinkel α ist, c ein Teil der Verschiebung d ist, für den c = d - a sin 2α gilt, und b die Parallelverschiebung des Lichtsensorarrays 36 bei der Verlagerung des Pilotstrahlprojektors um die Strecke a ist, für die b = a cos 2α gilt. In jedem Fall ist aus den bekannten Werten von α, a und d der Wert ζ des tatsächlichen Piloteinfallswinkels 39 bestimmbar.

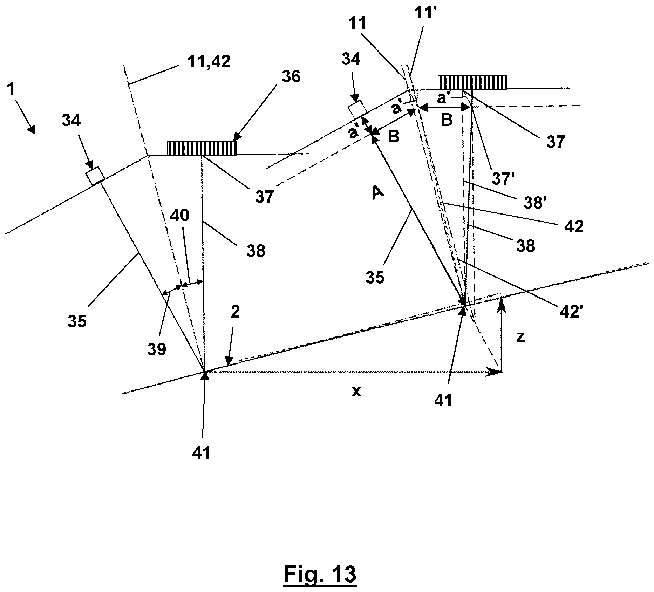

Wie in **Fig. 13****,** rechts illustriert ist, lässt sich aus der Lage des Auftreffpunkts 37 des Pilotstrahlanteils 38 auf das zweidimensionale Lichtsensorarray 36 gegenüber dem Pilotstrahlprojektor 34, hier konkret dem bekannten Abstand B der zuvor gemäß Fig. 12, rechts angefahrenen Sollposition des Auftreffpunkts 37 zu dem Sensorlot 42, und dem Wert ζ des tatsächlichen Piloteinfallswinkels 39 zudem der tatsächliche Abstand A des Pilotstrahlprojektors 34 zu der Oberfläche 2 bestimmen, hier gemäß A = B / tan ζ. Dann kann der Sollabstand des Pilotstrahlprojektors 34 zu der Oberfläche 2 eingestellt werden, indem der Pilotstrahlprojektor 34 aus seiner mit gestrichelter Linie dargestellten Position, zu der die gestrichenen Bezugszeichen gehören, um eine weitere Strecke a', d. h. die Differenz zwischen dem tatsächlichen Abstand A und dem Sollabstand, längs des Pilotlichtstrahls 35 von der Oberfläche 2 entfernt wird, bis die in Fig. 13, rechts mit durchgezogener Linie gezeigte Position erreicht ist, zu der die ungestrichenen Bezugszeichen gehören. An dieser Stelle sei angemerkt, dass es je nach Verlauf der äußeren Oberfläche stattdessen erforderlich sein kann, den Pilotstrahlprojektor 34 längs des Pilotlichtstrahls 35 um die Strecken a und a' an die Oberfläche 2 heranzuführen, um den tatsächlichen Abstand A an den Sollabstand anzugleichen. Weiterhin können die Strecken a und a' gegenläufige Richtungen längs des Pilotlichtstrahls 35 aufweisen.

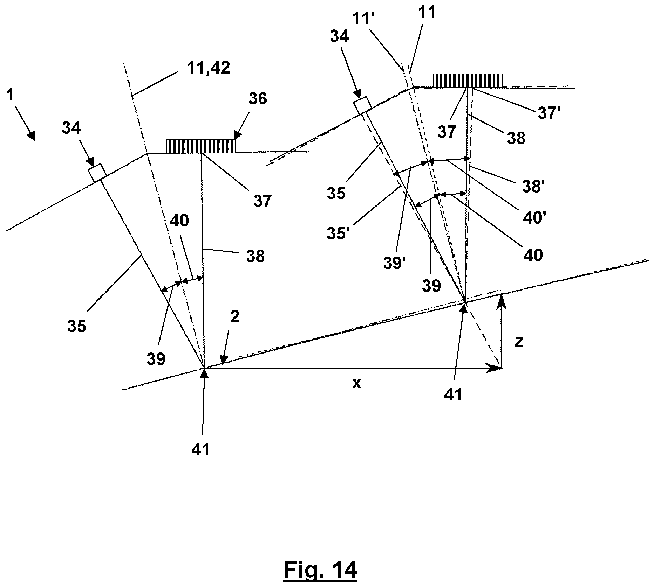

Indem die Vorrichtung 1 anschließend, wie in **Fig. 14****,** rechts gezeigt ist, aus ihrer mit gestrichelter Linie angedeuteten Position, zu der die gestrichenen Bezugszeichen gehören, um den Pilotstrahlauftreffbereich 41 über einen Winkel |ζ-α| oder bis sich der Auftreffpunkt 37 wieder an seiner Sollposition in der Mitte des Lichtsensorarrays 36 befindet, in die mit durchgezogener Linie dargestellte Position, zu der die ungestrichenen Bezugszeichen gehören, verschwenkt wird, wird der Wert ζ des tatsächlichen Piloteinfallswinkels 39 an den Sollpiloteinfallswinkel α angepasst. Damit ist die Vorrichtung 1 gegenüber der Oberfläche 2 in dem ursprünglichen Pilotstrahlauftreffbereich 41 gemäß Fig. 11, rechts korrekt ausgerichtet. Der Pilotstrahlauftreffbereich 41 liegt aber weiterhin an der Position x₀ + x - a_{ges} sin(α) und z₀ + z - a_{ges} cos(α), wobei a_{ges} = (a + a') die gesamte Strecke ist, um die der Pilotstrahlprojektor 34 längs des Pilotlichtstrahls 35 gegenüber der Oberfläche 2 verlagert werden musste, im vorliegenden Beispiel von der Oberfläche 2 entfernt werden musste, um den Sollabstand des Pilotstrahlprojektors 34 zu der Oberfläche 2 einzustellen.

Um mit dem Pilotstrahlauftreffbereich 41 die Position x₀ + x und z₀ + z anzufahren, kann die Vorrichtung 1 mit dem Pilotstrahlprojektor 34 und dem zweidimensionalen Lichtsensorarray 36 um a_{ges} sin(α) wieder auf die x-Position gemäß Fig. 11, rechts verschoben werden, und dieser Schritt sowie die Schritte gemäß Fig. 12 bis 14 können wiederholt werden, bis die Position x₀ + x und z₀ + z mit ausreichender Genauigkeit erreicht ist.

Eine Neigung der Oberfläche 2 aus der Zeichenebene der Figuren 11 bis 14 kann durch Verschwenken der Vorrichtung 1 um eine in der Zeichenebene senkrecht zu dem Sensorlot 42 durch den Pilotstrahlauftreffbereich 41 verlaufende Schwenkachse kompensiert werden. Die Kompensation ist erreicht, wenn der Auftreffpunkt 37 auch in der Richtung senkrecht zu der Zeichenebene der Figuren 11 bis 14 in seine Sollposition in der Mitte des Lichtsensorarrays 36 fällt.

### BEZUGSZEICHENLISTE

- 1: Vorrichtung
- 2: (äußere) Oberfläche
- 3: Objekt
- 4: Projektionseinrichtung
- 5: Analyseeinrichtung
- 6: Licht
- 7: Einfallswinkel
- 8: Ausfallswinkel
- 9: (reflektierter) Anteil (des Lichts 6)
- 10: Auftreffbereich
- 11: Oberflächennormale
- 12: Laser
- 13: Polarisator
- 14: photoelastischer Modulator (PEM)
- 15: Polarisationsmodulator
- 16: Halbwellenplatte
- 17: Polarisationsstrahlteiler
- 18: Spiegel
- 19: Differenzsensor
- 20: Lichtsensor
- 21: Unteranteil (des Anteils 9)
- 22: Unteranteil (des Anteils 9)
- 23: weiterer Anteil
- 24: (rückwärtige) Oberfläche
- 25: Strahlfalle
- 26: Viertelwellenplatte
- 27: Intensitätsmodulator
- 28: Chopper
- 29: Lochscheibe
- 30: Motor
- 31: Viertelwellenplatte
- 32: Polarisator
- 33: Positioniereinrichtung
- 34: Pilotstrahlprojektor
- 35: Pilotlichtstrahl
- 36: zweidimensionales Lichtsensorarray
- 37: Auftreffpunkt
- 38: Pilotstrahlanteil
- 39: Pilotstrahleinfallswinkel
- 40: Pilotstrahlausfallswinkel
- 41: Pilotstrahlauftreffbereich
- 42: Sensorlot
- α: Sollpilotstrahleinfallswinkel
- ζ: Wert des tatsächlichen Pilotstrahleinfallswinkels 39
- a: Strecke
- a': weitere Strecke
- b: Parallelverschiebung
- c: Teil der Verschiebung d
- d: Verschiebung
- A: Tatsächlicher Abstand
- B: Abstand der Sollposition des Auftreffpunkts 37 zu dem Sensorlot 42

## Patentansprüche

1. Verfahren zum kontaktlosen Messen von mechanischen Oberflächenspannungen eines lichtreflektierenden Objekts (3) aus einem Dielektrikum mit
- Richten von Licht (6) einer bekannten Einfallspolarisation unter einem festen Einfallswinkel (7) auf eine dem einfallenden Licht (6) zugewandte Oberfläche (2) des Objekts (3),
- Bestimmen einer Ausfallspolarisation eines an der dem einfallenden Licht (6) zugewandten Oberfläche (2) von dem Objekt (3) unter einem dem festen Einfallswinkel (7) gleichen festen Ausfallswinkel (8) reflektierten Anteils (9) des Lichts (6) und
- Ermitteln der Oberflächenspannung des Objekts (3) an der dem einfallenden Licht (6) zugewandten Oberfläche (2) des Objekts (3) im Auftreffbereich (10) des Lichts (6) auf die Oberfläche (2) aus der Ausfallspolarisation,
**dadurch gekennzeichnet,**
- **dass** das Licht (6) unter dem festen Einfallswinkel (7) durch eine an die dem einfallenden Licht (6) zugewandte Oberfläche (2) des Objekts (3) angrenzende Atmosphäre hindurch auf die dem einfallenden Licht (6) zugewandte Oberfläche (2) des Objekts (3) gerichtet wird.

2. Verfahren nach Anspruch 1,
- **wobei** ein weiterer Anteil (23) des Lichts (6), der an einer dem einfallenden Licht (6) abgewandten Oberfläche (2) des Objekts (3) reflektiert wird, von dem Anteil (9) des Lichts (6), der an der dem einfallenden Licht (6) zugewandten Oberfläche (2) von dem Objekts (3) reflektiert wird, separiert wird,
- **wobei,** optional, eine weitere Ausfallspolarisation des weiteren Anteils (23) des Lichts (6) bestimmt wird und aus der weiteren Ausfallspolarisation eine weitere mechanische Spannung im Volumen des Objekts (3) zwischen den Oberflächen (2, 24) im Umfeld eines weiteren Auftreffbereichs (10) des Lichts (6) auf die dem einfallenden Licht (6) abgewandte Oberfläche (24) ermittelt wird.

3. Verfahren nach Anspruch 1 oder 2, **wobei** zum Bestimmen der Ausfallspolarisation mindestens eine Intensität mindestens eines Unteranteils (21,22) des von dem Objekt (3) reflektierten Anteils (9) des Lichts (6) gemessen wird, wobei der mindestens eine Unteranteil (21, 22) eine bestimmte Polarisationsrichtung aufweist.

4. Verfahren nach Anspruch 3,
- **wobei** die Intensitäten von zwei Unteranteilen (21, 22) des von dem Objekt (3) reflektierten Anteils des Lichts (6) gemessen werden, wobei der eine der zwei Unteranteile (21, 22) in der Einfallsebene des Lichts (6) linear polarisiert ist und der andere der zwei Unteranteile (21, 22) senkrecht zu der Einfallsebene des Lichts (6) linear polarisiert ist, und
- **wobei** die Intensitäten der zwei Unteranteile (21, 22) miteinander verglichen werden,
- **wobei,** optional, die Intensitäten der zwei Unteranteile (21, 22) durch Ändern der Einfallspolarisation und/oder durch Ändern der Ausfallspolarisation für eine bekannte Oberflächenspannung des Objekts (3) relativ zueinander abgestimmt werden.

5. Verfahren nach Anspruch 3, **wobei** die Intensitäten von vier Unteranteilen (21, 22) des von dem Objekt (3) reflektierten Anteils (9) des Lichts (6) gemessen werden, die unter Winkeln von 45° zueinander linear polarisiert sind.

6. Verfahren nach einem der Ansprüche 3 bis 5,
- **wobei** das Licht (6), das auf das Objekt (3) gerichtet wird, bezüglich seiner Einfallsintensität und/oder seiner Einfallspolarisation moduliert wird, und/oder der von dem Objekt (3) reflektierte Anteil (9) des Lichts (6) bezüglich seiner Ausfallspolarisation moduliert wird und
- **wobei** die mindestens eine Intensität des mindestens einen Unteranteils (21, 22) abhängig von der Modulation des Lichts (6) und/oder des von dem Objekt (3) reflektierten Anteils (9) des Lichts (6) gemessen wird.

7. Verfahren nach einem der vorhergehenden Ansprüche, **wobei** der Einfallswinkel (7) in einen Bereich von 10° bis 80° fällt, wobei, optional, das Dielektrikum transparent ist und der Einfallswinkel (7) ungleich einem Brewster-Winkel bei der Reflexion des einfallenden Lichts (6) an der dem einfallenden Licht (6) zugewandten Oberfläche (2) ist.

8. Verfahren nach einem der vorhergehenden Ansprüche,
- **wobei** die dem einfallenden Licht (6) zugewandten Oberfläche (2) des Objekts (3) mit dem Auftreffbereich (10) des Lichts (6) auf die Oberfläche (2) abgetastet wird,
- **wobei,** optional, das einfallende Licht (6) quer zu seiner Einfallsebene aufgeweitet wird, so dass ein linienförmiger Auftreffbereich (10) des Lichts (6) auf die Oberfläche (2) resultiert, und die Ausfallspolarisation des reflektierten Anteils (9) des Lichts (6) mittels einer polarisationsempfindlichen Kamera mit Ortsauflösung längs des linienförmiger Auftreffbereichs (10) bestimmt wird.

9. Verfahren nach Anspruch 8,
- **wobei** der Einfallswinkel (7) und ein Abstand, aus dem das Licht (6) auf das Objekt (3) gerichtet wird und in dem die Ausfallspolarisation des von dem Objekt (3) reflektierten Anteils (9) des Lichts (6) bestimmt wird, beim Abtasten der Oberfläche (2) des Objekts (3) mit dem Auftreffbereich (10) des Lichts (6) auf die Oberfläche (2) konstant gehalten werden,
- **wobei,** optional, ein Pilotlichtstrahl (35) unter einem Piloteinfallswinkel in einem Bereich von 10° bis 80° auf die dem einfallenden Licht (6) zugewandte Oberfläche (2) des Objekts (3) gerichtet und die Richtung eines an der dem einfallenden Licht (6) zugewandten Oberfläche (2) von dem Objekt (3) reflektierten Pilotstrahlanteils (38) des Pilotlichtstrahls (35) bestimmt wird.

10. Vorrichtung (1) zur Durchführung des Verfahrens nach einem der vorhergehenden Ansprüche mit
- einer Projektionseinrichtung (4), die dazu ausgebildet ist, Licht (6) einer bekannten Einfallspolarisation unter einem festen Einfallswinkel (7) auf eine dem einfallenden Licht (6) zugewandte Oberfläche (2) des Objekts (3) zu richten,
- einer Analyseeinrichtung (5), die dazu ausgebildet ist, eine Ausfallspolarisation eines an der dem einfallenden Licht (6) zugewandten Oberfläche (2) von dem Objekt (3) unter einem dem festen Einfallswinkel (7) gleichen festen Ausfallswinkel (8) reflektierten Anteils (9) des Lichts (6) zu bestimmen und aus der Ausfallspolarisation die Oberflächenspannung des Objekts (3) an der dem einfallenden Licht (6) zugewandten Oberfläche (2) des Objekts (3) im Auftreffbereich (10) des Lichts (6) auf die Oberfläche (2) zu ermitteln,
**dadurch gekennzeichnet,**
- **dass** die Projektionseinrichtung (4) und die Analyseeinrichtung (5) so zueinander ausgerichtet sind, dass ein Anteil (9) des Lichts (6), das von der Projektionseinrichtung (4) kommend unter dem festen Einfallswinkel (7) durch eine an die dem einfallenden Licht (6) zugewandte Oberfläche (2) des Objekts (3) angrenzende Atmosphäre hindurch auf die dem einfallenden Licht (6) zugewandte Oberfläche (2) des Objekts (3) fällt, wobei der Anteil (9) an der dem einfallenden Licht (6) zugewandten Oberfläche (2) von dem Objekt (3) reflektiert wird, aber kein weiterer Anteil (23) des Lichts (6), der an einer dem einfallenden Licht (6) abgewandten Oberfläche (24) des Objekts (3) reflektiert wird, durch die Atmosphäre hindurch zu der Analyseeinrichtung (5) gelangt.

11. Vorrichtung (1) nach Anspruch 10,
- **wobei** die Projektionseinrichtung (4) eine Lichtquelle und einen Polarisator (13) und/oder einen Polarisationsmodulator (15) und/oder einen Intensitätsmodulator (27) und/oder eine Viertelwellenplatte (26) und/oder eine Halbwellenplatte (16) aufweist und
- **wobei** die Analyseeinrichtung (5) mindestens einen Lichtsensor (20) und einen Polarisator (32) und/oder einen Polarisationsstrahlteiler (17) und/oder einen Polarisationsmodulator und/oder einen Intensitätsmodulator und/oder eine Viertelwellenplatte (31) und/oder eine Halbwellenplatte aufweist.

12. Vorrichtung (1) nach Anspruch 10 oder 11,
- **mit** einer Positioniereinrichtung (33), die zum gemeinsamen Verfahren und Verschwenken der Projektionseinrichtung (4) und der Analyseeinrichtung (5) gegenüber dem Objekt (3) ausgebildet ist,
- **wobei** die Positioniereinrichtung (33) optional zum gemeinsamen Verdrehen der Projektionseinrichtung (4) und der Analyseeinrichtung (5) um eine Oberflächennormale (11) des Objekts (3) ausgebildet ist.

13. Vorrichtung (1) nach Anspruch 12,
- **wobei** ein Pilotstrahlprojektor (34) und ein zweidimensionales Lichtsensorarray (36) mit der Projektionseinrichtung (4) und der Analyseeinrichtung (5) verbunden sind, wobei der Pilotstrahlprojektor (34) dazu ausgebildet ist, einen Pilotlichtstrahl (35) unter einem Pilotstrahleinfallswinkel (39) im Bereich von 10° bis 80° auf die dem einfallenden Licht (6) zugewandte Oberfläche (2) des Objekts (3) zu richten, und das Lichtsensorarray (36) dazu angeordnet ist, einen Auftreffpunkt (37) eines an der dem einfallenden Licht (6) zugewandten Oberfläche (2) von dem Objekt (3) reflektierten Pilotstrahlanteils (38) des Pilotlichtstrahls (35) zu registrieren,
- **wobei** optional eine Pilotstrahleinfallsebene des Pilotlichtstrahls (35) senkrecht zu einer Einfallebene des Lichts (6) verläuft und/oder der Pilotstrahleinfallswinkel (39) sich von dem Einfallswinkel (7) um mindestens 10° unterscheidet und/oder sich der Pilotlichtstrahl (35) und das Licht (6) um mindestens 50 nm in ihren Wellenlängen unterscheiden.

14. Verwendung einer Vorrichtung (1) nach Anspruch 13 bei der Durchführung des Verfahrens nach einem der Ansprüche 1 bis 9,
- **wobei** die Positioniereinrichtung (33) so angesteuert wird, dass die Projektionseinrichtung (4), die Analyseeinrichtung (5), der Pilotstrahlprojektor (34) und das Lichtsensorarray (36) gemeinsam über eine bestimmte Strecke (a) in Richtung des Pilotlichtstrahls (35) verlagert werden, wobei aus einer resultierenden Verlagerung (d) des Auftreffpunkts (37) des reflektierten Pilotstrahlanteils (38) des Pilotlichtstrahls (35) auf dem Lichtsensorarray (36) ein tatsächlicher Pilotstrahleinfallswinkel (39) bestimmt wird, wobei die Positioniereinrichtung (33) so angesteuert wird, dass die Projektionseinrichtung (4), die Analyseeinrichtung (5), der Pilotstrahlprojektor (34) und das Lichtsensorarray (36) so gegenüber der Oberfläche (2) angeordnet und ausgerichtet werden, dass der tatsächliche Pilotstrahleinfallswinkel (39) einem Sollpilotstrahleinfallswinkel (α) entspricht, und
- **wobei,** optional, aus dem tatsächlichen Pilotstrahleinfallswinkel (39) und einer Lage des Auftreffpunkts (37) des reflektierten Pilotstrahlanteils (38) des Pilotlichtstrahls (35) auf dem Lichtsensorarray (36) ein tatsächlicher Abstand des Pilotstrahlprojektors (34) zu einen Pilotstrahlauftreffbereich (41) bestimmt wird, in dem der Pilotlichtstrahl (35) auf die Oberfläche (2) des Objekts (3) auftrifft, wobei die Positioniereinrichtung (33) so angesteuert wird, dass die Projektionseinrichtung (4), die Analyseeinrichtung (5), der Pilotstrahlprojektor (34) und das Lichtsensorarray (36) so gegenüber der Oberfläche (2) angeordnet und ausgerichtet werden, dass der tatsächliche Abstand einem Sollabstand des Pilotstrahlprojektors (34) zu dem Pilotstrahlauftreffbereich (41) entspricht.

15. Verwendung einer Vorrichtung (1) nach Anspruch 13 bei der Durchführung des Verfahrens nach einem der Ansprüche 1 bis 9, insbesondere nach Anspruch 14, **wobei** die Positioniereinrichtung (33) so angesteuert wird, dass die Projektionseinrichtung (4), die Analyseeinrichtung (5), der Pilotstrahlprojektor (34) und das Lichtsensorarray (36) gemeinsam um eine in einer Pilotstrahlsolleinfallsebene verlaufende Schwenkachse verschwenkt werden, bis der Auftreffpunkt (37) des reflektierten Pilotstrahlanteils (38) des Pilotlichtstrahls (35) auf das Lichtsensorarray (36) in der Pilotstrahlsolleinfallsebene liegt.
